# EUROPÄISCHE PATENTSCHRIFT

(11) **EP 1 705 220 B1**
(45) Veröffentlichungstag und Bekanntmachung des Hinweises auf die Patenterteilung: **28.10.2009**
(21) Anmeldenummer: 06005452.5
(22) Anmeldetag: 17.03.2006
(51) Int. Cl.: C08K 5/5313, C08K 3/00

(54) **Phosphorhaltige thermostabilisierte Flammschutzmittelagglomerate**
Phosphorous containing heat stabilized fire retardant agglomerates
Agents d'ignifugation agglomérés thermostabilisés contenant du phosphore

(30) Priorität: 26.03.2005 DE 102005013957
(43) Veröffentlichungstag der Anmeldung: 27.09.2006
(73) Patentinhaber: Clariant Produkte (Deutschland) GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE)
(74) Vertreter: Mikulecky, Klaus

(56) Entgegenhaltungen:
- EP-A- 1 396 522
- EP-A- 1 396 523
- EP-A- 1 522 551
- EP-A- 1 602 685
- WO-A-2004/046235

## Beschreibung

Die Erfindung bezieht sich auf phosphorhaltige thermostabilisierte Flammschutzmittelagglomerate von hoher thermischer Beständigkeit gegen Verfärbung, die Aggregate und/oder Primärteilchen aus Phosphinsäuresalzen und/oder Diphosphinsäuresalzen und/oder deren Polymeren enthalten und mit Hilfe eines Hilfsmittels zusammenhaften. Die Erfindung betrifft auch ein Verfahren zur Herstellung dieser phosphorhaltigen Flammschutzmittelagglomerate und die Verwendung derselben als Flammschutzmittel in Polymeren.

Nach dem Stand der Technik (DE-A-103 47 012) gelingt es, phosphorhaltige Flammschutzmittel durch Sprühagglomeration herzustellen. Es werden dabei Bindemittel eingesetzt, die das Agglomerat mechanisch stabilisieren sollen.

Die im Stand der Technik beschriebenen Agglomerate sind nachteilig, da sie sich beim Erhitzen verfärben. Da ein derartiges Erhitzen bei der bestimmungsgemäßen Verarbeitung der Agglomerate zu flammgeschützten Formmassen bzw. flammgeschützten Formkörpern erfolgt, ergeben sich ebenfalls nachteilige Verfärbungen bei diesen Produkten.

Es ist Aufgabe der vorliegenden Erfindung, phosphorhaltige thermostabilisierte Flammschutzmittel-Agglomerate zur Verfügung zu stellen, die thermische gegen Verfärbung wesentlich beständiger sind.

Gelöst wird diese Aufgabe durch ein Agglomerat eines phosphorhaltigen Flammschutzmittels, das ein geeignetes Hilfsmittel enthält.

Flammschutzmittelagglomerate Überraschend wurde gefunden, dass durch Wahl des geeigneten Hilfsmittels die Verfärbung beim Erhitzen der phosphorhaltigen Flammschutzmittelagglomerate weitgehend verhindert werden kann.

Gegenstand der Erfindung sind daher phosphorhaltige thermostabilisierte Flammschutzmittelagglomerate, enthaltend als Komponente A 6 bis 99,99 Gew.-% Aggregate und/oder Primärteilchen von einem Phosphinsäuresalz der Formel (I) und/oder von einem Diphosphinsäuresalz der Formel (II) und/oder von deren Polymeren, 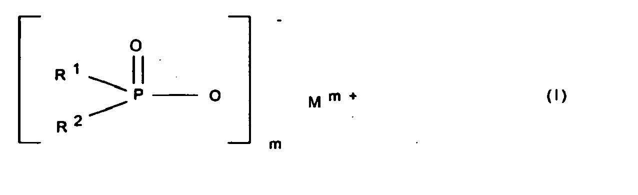 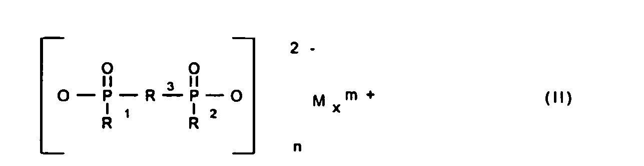 worin
- R¹, R²: gleich oder verschieden sind und C1-C6-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Zn, Ti, Fe, Zr, Ce, Bi, Sr, Mn, Li, Na, K und/oder eine protonierte Stickstoffbase;
- m: 1 bis 4; n 1 bis 4; x 1 bis 4 bedeuten;
als Komponente B 0 bis 90 Gew.-% eines Synergisten
als Komponente C 0 bis 20 Gew.-% Verbindungen der Elemente Calcium, Magnesium und/oder Zink und
als Komponente D 0,01 bis 20 Gew.-% Hilfsmittel, wobei es sich bei dem Hilfsmittel um Polystyrolsulfonsäure, Polystyrolsulfonsäure-Maleinsäureanhydrid-Copolymere und/oder Wasserglas und/oder Homopolymere oder gemischte Polymere basierend auf mindestens einem Monomer aus der Gruppe Maleinsäure und/oder Styrolsulfonsäure handelt.

Bevorzugt enthalten die phosphorhaltigen thermostabilisierten Flammschutzmittelagglomerate
6 bis 99,99 Gew.-% an Komponente A
6 bis 90 Gew.-% an Komponente B
0 bis 20 Gew.-% an Komponente C
0,01 bis 20 Gew.-% an Komponente D.

Bevorzugt enthalten die phosphorhaltigen thermostabilisierten Flammschutzmittelagglomerate
6 bis 99,89 Gew.-% an Komponente A
6 bis 90 Gew.-% an Komponente B
0,1 bis 20 Gew.-% an Komponente C
0,01 bis 20 Gew.-% an Komponente D.

Bevorzugt enthalten die phosphorhaltigen thermostabilisierten Flammschutzmittelagglomerate
20 bis 98,9 Gew.-% an Komponente A
20 bis 74 Gew.-% an Komponente B
1 bis 10 Gew.-% an Komponente C
0,1 bis 5 Gew.-% an Komponente D.

Die Summe der Komponenten beträgt immer 100 Gew.-%.

Bevorzugt handelt es sich bei der Komponente B um Melaminphosphat, Melaminpyrophosphat, Melaminpolyphosphate, Melampolyphosphate, Melempolyphosphate, Melonpolyphosphate, Melamincyanurat und/oder Melaminkondensationsprodukte wie Melam, Melem und/oder Melon.

Bevorzugt handelt es sich bei der Komponente C um Magnesiumhydroxid, Magnesiumcarbonat, Magensiumborat, Calciumcarbonat, Calciumborat, Calciumpyroborat, Zinkoxid, Zinkhydroxid, Zinkborat, Zinkphosphat und/oder Zinkpyrophosphat.

Die erfindungsgemäßen phosphorhaltigen thermostabilisierten Flammschutzmittelagglomerate haben nach Wärmebehandlung bevorzugte L-Farbwerte von 80 bis 99,9, besonders bevorzugt 85 bis 98.

Die erfindungsgemäßen phosphorhaltigen thermostabilisierten Flammschutzmittelagglomerate haben bevorzugte a-Farbwerte von -2 bis +2, besonders bevorzugt -1 bis +1,5.

Die erfindungsgemäßen phosphorhaltigen thermostabilisierten Flammschutzmittelagglomerate haben, bevorzugte b-Farbwerte von -2 bis +8, besonders bevorzugt -1 bis +7.

Die Erfindung betrifft auch ein Verfahren zur Herstellung von phosphorhaltigen thermostabilisierten Flammschutzmittelagglomeraten, dadurch gekennzeichnet, dass man Aggregate und/oder Primärteilchen von einem Phosphinsäuresalz der Formel (I) und/oder von einem Diphosphinsäuresalz der Formel (II) und/oder von deren Polymeren 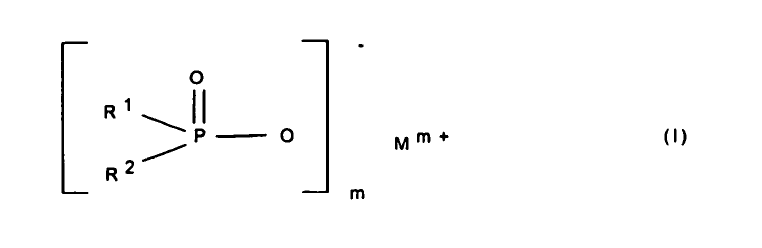 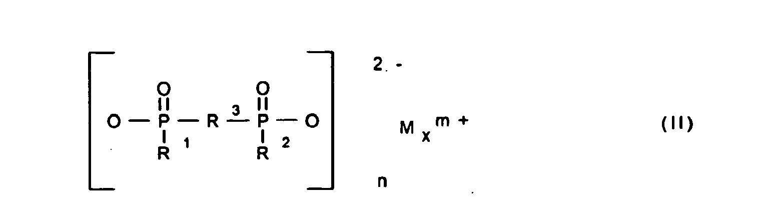 worin
- R¹, R²: gleich oder verschieden sind und C1-C6-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Zn, Ti, Fe, Zr, Ce, Bi, Sr, Mn, Li, Na, K und/oder eine protonierte Stickstoffbase;
- m: 1 bis 4; n 1 bis 4; x 1 bis 4 bedeuten,
in Gegenwart eines Hilfsmittels und ggf. eines Granulierhilfsmittels agglomeriert, wahlweise das Granulierhilfsmittel entfernt, wahlweise Agglomerate geeigneter Größe aussortiert und wahlweise Agglomerate nicht geeigneter Größe aufbereitet und in den Agglomerier-Prozess zurückführt.

Bevorzugt fügt man beim vorgenannten Verfahren mindestens einen Synergisten, der eine Stickstoff-, Phosphor- oder Phosphorstickstoffverbindung enthält und/oder Verbindungen der Elemente der zweiten Haupt- und/oder Nebengruppe während der Agglomeration hinzu.

Die Erfindung betrifft auch flammgeschützte Polymerformmasse enthaltend 1 bis 50 Gew.-% erfindungsgemäße phosphorhaltige thermostabilisierte Flammschutzmittelagglomerate nach mindestens einem der Ansprüche 1 bis 6,
1 bis 99 Gew.-% Polymer oder Mischungen derselben
0 bis 60 Gew.-% Additive
0 bis 60 Gew.-% Füllstoff.

Die Erfindung betrifft auch ein Verfahren zur Herstellung von flammgeschützten Polymerformmassen, bei dem die erfindungsgemäßen phosphorhaltigen thermostabilisierten Flammschutzmittelagglomerate nach mindestens einem der Ansprüche 1 bis 6 mit dem Polymergranulat und evtl. Additiven in einem Compoundieraggregat bei höheren Temperaturen in der Polymerschmelze homogenisiert werden und anschließend der homogenisierte Polymerstrang abgezogen, gekühlt und portioniert wird.

Die Erfindung betrifft auch Polymer-Formkörper, -Filme, -Fäden und -Fasern enthaltend 1 bis 50 Gew.-% erfindungsgemäße phosphorhaltige thermostabilisierte Flammschutzmittelagglomerate nach mindestens einem der Ansprüche 1 bis 6
1 bis 99 Gew.-% Polymer oder Mischungen derselben
0 bis 60 Gew.-% Additive
0 bis 60 Gew.-% Füllstoff.

Bevorzugt enthalten die flammgeschützte Polymer-Formkörper, -Filme, -Fäden und -Fasern 60 bis 98 Gew.- % flammgeschützte Polymerformmasse nach Anspruch 7, 2 bis 40 Gew.-% Polymer oder Mischungen derselben enthalten.

Bevorzugt beträgt die mittlere Teilchengröße der erfindungsgemäßen phosphorhaltigen thermostabilisierten Flammmittelagglomerate 0,1 bis 3.000 µm, besonders bevorzugt 100 bis 3.000 µm und insbesondere 200 bis 2.000 µm. Geringere Teilchengrößen erfüllen nicht den Zweck der Staubfreiheit. Größere Teilchengrößen ergeben Produkte mit erhöhtem Abrieb und geringen Schüttgewichtes.

Bevorzugt beträgt die Schüttdichte der erfindungsgemäßen phosphorhaltigen thermostabilisierten Flammmittelagglomerate 80 bis 1500 g/l, besonders bevorzugt 80 bis 800 g/l und insbesondere 200 bis 500 g/l und 200 bis 400 g/l. Geringere Schüttdichten erschweren wegen des hohen Luftgehaltes die Einarbeitung in das Polymer mit dem Extruder zu flammgeschützten Polymerformmassen. Größere Schüttdichten sind durch Agglomerierung nicht oder nur schwer herzustellen.

Bevorzugt beträgt der Restfeuchtegehalt der eingesetzten Phosphinat- bzw. Synergisten-Aggregate 0,05 bis 30 Gew.-%, bevorzugt 0,1 bis 50 Gew.-%. Phosphinat- bzw. Synergisten-Aggregate mit höheren Restfeuchtegehalten sind nicht mehr handhabbar, da sie zum Verklumpen neigen. Phosphinat- bzw. Synergisten-Aggregate mit niedrigeren Restfeuchtegehalten sind technisch schwer herzustellen. Bevorzugt beträgt der mittlere Teilchendurchmesser der eingesetzten Phosphinat- bzw. Synergisten-Aggregate 0,1 bis 500 µm, besonders bevorzugt 1 bis 100 µm.

Bevorzugt beträgt der mittlere Teilchendurchmesser der Phosphinat- bzw. Synergisten-Primärpartikel 0,1 bis 50 µm, besonders bevorzugt 1 bis 10 µm.

Phosphinat- bzw. Synergisten-Aggregate mit größeren mittleren Teilchendurchmesser ergeben Inhomogenitäten in den flammgeschützten Polymerformkörpern. Phosphinat- bzw. Synergisten-Aggregate mit niedrigeren mittleren Teilchendurchmesser sind technisch schwer herzustellen.

Die vorgenannten Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Phosphorhaltige thermostabilisierte Flammschutzmittelagglomerate mit L-Werten unterhalb des auf Seite 5 genannten erfindungsgemäßen Bereiches erfordern einen höheren Weißpigmenteinsatz. Diorganylphosphinsäure-Salze mit a- bzw. b-Werten außerhalb des erfindungsgemäßen Bereiches erfordern ebenfalls einen höheren Weißpigmenteinsatz. Dieser verschlechtert die mechanischen Stabilitätseigenschaften des Polymerformkörpers (z.B. E-Modul).

Bevorzugt beträgt der Abrieb der phosphorhaltigen thermostabilisierten Flammmittelagglomerate 30 bis 95 %, besonders bevorzugt 40 bis 80 %.

Bevorzugt beträgt der Restfeuchtegehalt der phosphorhaltigen thermostabilisierten Flammmittelagglomerate 0,05 bis 2, besonders bevorzugt 0,1 bis 1 Gew.-%. Restfeuchten außerhalb des erfindungsgemäß bevorzugten Bereiches beeinträchtigen die Verträglichkeit mit dem Polymer. Dies bedeutet schlechtere Festigkeits- und Elastizitätseigenschaften der flammgeschützten Polymerformmassen und der flammgeschützten Polymerformkörper.

Unter dem Begriff phosphorhaltige thermostabilisierte Flammschutzmittelagglomerate werden erfindungsgemäß ebenfalls Teilchen einer phosphorhaltigen thermostabilisierten Flammmittel-Zusammensetzung verstanden, die aus Primärpartikeln und/oder Aggregaten/ Primärteilchen eines Phosphinsäuresalzes der Formel (I) und/oder eines Diphosphinsäuresalz der Formel (II) und/oder deren Polymeren und mindestens eines Synergisten bestehen und die durch ein Hilfsmittel aneinander gebunden sind.

Bevorzugt bedeutet M in den Formeln (I) und (II) Calcium, Aluminium, Zink oder Titan.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenyl-butylen.

Bevorzugt handelt es sich bei dem Synergisten um einen solchen, der eine Stickstoff-, Phosphor- oder Phosphorstickstoffverbindung enthält.

Geeignete Synergisten sind Melaminphosphat (z.B. ^{®}Melapur MPH, ®Melapur MP der Fa. Ciba-DSM Melapur), Melaminacetat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat (z.B. ^{®}Budit 311 der Fa. Budenheim, ^{®}MPP-B der Fa. Sanwa Chemicals), Melaminpolyphosphate, Melampolyphosphate, Melempolyphosphate und/oder Melonpolyphosphate. Besonders bevorzugt sind Melaminpolyphosphate wie ^{®}Melapur 200/70, ^{®}Melapur CGX FR231 der Fa. Ciba-DSM Melapur, ^{®}Budit 3141, 3141 CA und 3141 CB und Melaminpolyphosphat/ Melaminpyrophosphat der Typen 13-1100, 13-1105, 13-1115, MPP02-244 der Fa. Hummel-Croton und ^{®}PMP-100 bzw. ^{®}PMP-200 der Fa. Nissan Chemical Industries, Japan. Ebenfalls geeignet: ^{®}Melapur MC 25, ^{®}Melapur MC oder ^{®}Melapur MC XL der Fa. Ciba-DSM Melapur und Melamin-Ammonium-Polyphosphate.

In einer weiteren Ausführungsform sind Kondensationsprodukte des Melamins (z.B. Melam, Melem und/oder Melon) oder Umsetzungsprodukte des Melamins mit Phosphorsäure bzw. Umsetzungsprodukte von Kondensationsprodukten des Melamins mit Phosphorsäure sowie Gemische der genannten Produkte bevorzugt. Kondensationsprodukte des Melamins sind z. B. Melem, Melam oder Melon bzw. höher kondensierte Verbindungen dieses Typs sowie Gemische derselben und können z.B. durch ein Verfahren hergestellt werden, wie es in der WO-96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat (^{®}PMP-200^{™} von Fa. Nissan Chemical Industries) und Melempolyphosphat (^{®}PMP-300^{™} von Fa. Nissan Chemical Industries) bzw. gemischte Polysalze, wie sie z. B. in der WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog WO 98/45364 hergestellt werden durch die Umsetzung von Polyphosphorsäure und Melamin bzw. analog WO 98/08898 durch die Kondensation von Melaminphosphat bzw. Melaminpyrophosphat.

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Melaminkondensationsprodukte wie Melam, Melem und/oder Melon, Melamincyanurat (z.B. ^{®}Melapur MC oder ^{®}Melapur MC XL der Fa. Ciba-DSM Melapur), Dicyandiamid und/oder Guanidin.

Erfindungsgemäß sind als Synergisten weiterhin bevorzugt stickstoffhaltige Phosphate der Formeln (NH₄)yH₃-yPO₄ bzw. (NH₄PO₃)z, mit y gleich 1 bis 3 und z gleich 1 bis 10.000.

Erfindungsgemäß sind als Synergisten Stickstoffverbindungen wie Allantoin, Melamin, Cyanursäure, Glycoluril, Harnstoff und ihre Derivate bevorzugt, z.B. solche der Formeln (III) bis (VIII) oder Gemische davon 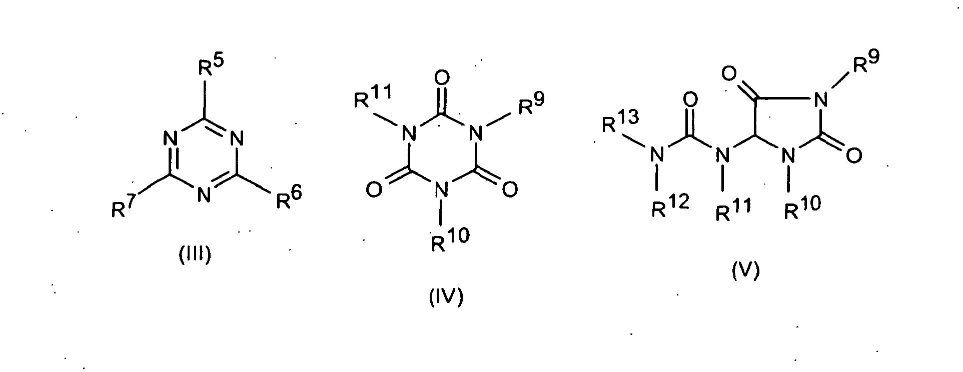 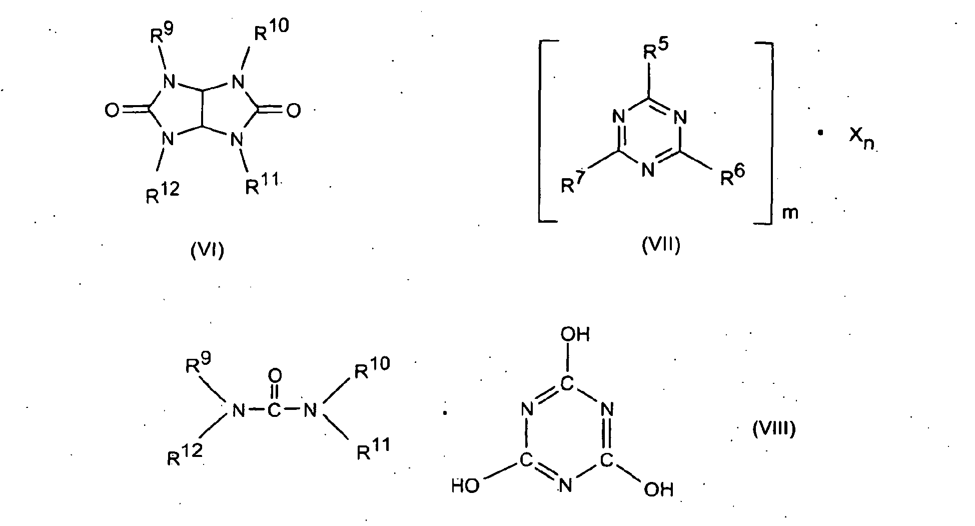 worin
- R⁵ bis: R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, OR⁸ und -N(R⁸)R⁹, sowie N-alicyclisch oder N-aromatisch,
- R⁸: Wasserstoff, C₁-C₈-Alkyl, C₅₋C₁₆-Cycloalkyl **o**der-Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Bevorzugte Synergisten sind Verbindungen der Elemente der zweiten Haupt- und/oder Nebengruppe, besonders bevorzugt sind Verbindungen der Elemente Calcium, Magnesium und Zink.

Bevorzugte Synergisten unter den Magnesiumverbindungen sind Magnesiumoxid, Magnesiumhydroxid (z.B. ^{®}Magnifin H5 der Fa. Albermarle), Magnesiumoxidhydroxide, Hydrotalcite, Dihydrotalcit, Magnesium-Carbonate, Magnesiumhydroxidcarbonate, Magnesium-Calcium-Carbonate, monobasisches, dibasisches, tribasisches Magnesiumphosphat und/oder Magnesiumpyrophosphat.

Bevorzugte Synergisten unter den Calciumverbindungen sind Calciumborat, Calciumpyroborat, Calciumcarbonat, Calciumhydroxid, monobasisches, dibasisches, tribasisches Calciumphosphat und/oder Calciumpyrophosphat.

Bevorzugte Synergisten sind Zinkverbindungen, z.B. Zinkoxid (z.B. Zinkoxid aktiv von Rhein Chemie, Brüggemann KG, Zincit oder Calamin; Standard-Zinkoxid, Zinkweiß G6, Zinkoxid 2011, Zinkoxid F-80, Zinkweiß Pharma 8, Zinkweiß Pharma A, Zinkweiß Rotsiegel, Zinkweiß Weissiegel der Fa. Grillo-Werke AG), Zinkhydroxid und/oder Zinkoxidhydrat.

Bevorzugte Synergisten sind Zinksalze der Oxosäuren der vierten Hauptgruppe (wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkhexafluorosilicat hexahydrat, Zinkstannat und/oder Zink-Magnesium-AluminiumHydroxid-Carbonat).

Bevorzugte Synergisten sind auch Zinksalze der Oxosäuren der dritten Hauptgruppe (Zinkborat, z.B. ^{®}Firebrake ZB, ^{®}Firebrake 415 der Fa. Borax).

Bevorzugte Synergisten sind auch Zinksalze der Oxosäuren der fünften Hauptgruppe (Zinkphosphat, Zinkpyrophosphat).

Bevorzugte Synergisten sind weiterhin Zinksalze der Oxosäuren der Übergangsmetalle (Zinkchromat(VI)hydroxyd (Zinkgelb), Zinkchromit, Zinkmolybdat, z.B. ^{®}Kemgard 911 B, Zinkpermanganat, Zinkmolybdat-Magnesiumsilicat, z.B. ^{®}Kemgard 911 C der Fa. Sherwin-Williams Company, Zinkpermanganat)

Bevorzugt als Synergisten sind auch Zinksalze mit organischen Anionen, wie Zinksalze von Mono-, Di-, Oligo-, Polycarbonsäuren (Salze der Ameisensäure (Zinkformiate), der Essigsäure (Zinkacetate, Zinkacetatdihydrat, Galzin), der Trifluoressigsäure (Zinktrifluoracetathydrat), Zinkpropionat, Zinkbutyrat, Zinkvalerat, Zinkcaprylat, Zinkoleat, Zinkstearat (^{®}Liga 101 der Fa. Greven Fett-Chemie), der Oxalsäure (Zinkoxalat ), der Weinsäure (Zinktartrat), Zitronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionen (Zinkphenolat etc.), Zink-para-Phenolsulfonat, Zink-para-Phenolsulfonathydrat, Zinkacetylacetonathydrat, Zinktannat, Zinkdimethyl-dithiocarbamat und/oder Zinktrifluormethansulfonat.

Bevorzugte Synergisten sind zudem Zinkphosphide, Zinksulfide, Zinkselenide und Zinktelluride.

Bevorzugte Synergisten sind Verbindungen der Elemente der dritten Hauptgruppe, besonders bevorzugt des Aluminiums und Bors.

Bevorzugte Synergisten sind Aluminiumverbindungen, z.B. Aluminiumoxid, Aluminiumoxidhydroxid (Böhmit, Diaspor), Aluminiumhydroxid (Bayerit, Gibbsit, Hydrargillit) oder Aluminiumphosphat.

Bevorzugte Synergisten sind Borverbindungen, z.B. Borphosphat.
Bevorzugte Synergisten sind Zinnverbindungen, z.B. Zinnoxid, Zinnoxidhydrate, Zinn(II)hydroxid und/oder Zinnsulfid.

Bevorzugte Synergisten sind auch Carbodiimide (z.B. ^{®}Stabaxol 1, ^{®}Stabaxol P, Stabaxol KE 9193 der Fa. Rhein Chemie) N,N'Dicyclohexylcarbodiimid und/oder Polyisocyanate (z.B. ^{®}Basonat HI 100 oder ^{®}Vestanat T 1890/100), Carbonylbiscaprolactam (Fa Allinco) oder Styrol-Acryl-Polymere (^{®}Joncryl ADR-4357 der Fa. Johnson); sterisch gehinderten Phenole (z.B. ^{®}Hostanox OSP 1), sterisch gehinderte Amine und Lichtstabilisatoren (z.B. ^{®}Chimasorb 944, ^{®}Hostavin-Typen), Phosphonite und Antioxidantien (z.B. Sandostab^{®} P-EPQ der Fa. Clariant) und Trennmittel (^{®}Licomont-Typen der Fa. Clariant).

### Hilfsmittel

Das Hilfsmittel ist so gewählt, dass das Agglomerat beim Einarbeiten in das Polymer in separate Aggregate und/oder Primärpartikel mit einer mittleren Teilchengrößen von 0,1 bis 500 µm aufbricht.

Das Hilfsmittel bindet die Aggregate und Primärpartikel aneinander, allerdings nicht so stark, dass diese sich nicht wieder in einem Polymer dispergieren lassen. Das bedeutet, dass je nach Prozess und/oder Prozessbedingungen, mit denen das phosphorhaltige thermostabilisierte Flammschutzmittel in Polymere eingearbeitet werden soll, unterschiedliche Hilfsmittel gewählt werden müssen.

Bevorzugt handelt es sich bei dem Hilfsmittel um Homopolymere oder gemischte Polymere basierend auf mindestens einem Monomer aus der Gruppe Acrylsäure, Amide, Cellulosederivative, Epoxide, Ester, Hydroxyacrylsäure, Methacrylsäure, Olefine, Stearate, Urethane, Vinylacetat, Vinylalkoholderivate, Vinylcaprolactam, Vinylpyrrolidon oder Mischungen davon.

Bevorzugt wird als Hilfsmittel ein Polyvinylpyrrolidon mit einem Molekulargewicht zwischen 5.000 und 2.000.000 eingesetzt, bevorzugt ein solches mit einem Molekulargewicht zwischen 5.000 bis 200.000, besonders bevorzugt ein solches mit einem Molekulargewicht zwischen 7.000 bis 11.000 oder in einer anderen Ausführungsform mit einem Mölekulargewicht zwischen 1.200.000 bis 2.000.000.

Bevorzugt wird als Hilfsmittel auch Polyvinylalkohol, Polyvinylbutyral (PVB), Polyvinylcaprolactam, Hydroxyethylcellulose, Hydroxypropylcellulose und/oder Natriumcarboxymethylcellulose eingesetzt.

Bevorzugte Hilfsmittel sind insbesondere Polycarboxylate.

Bevorzugte Polycarboxylate sind Polymere auf Basis mindestens eines der folgenden Monomere, wie Polyacrylate, Polyhydroxyacrylate, Polymaleate, Polymethacrylate oder Mischungen davon.

Geeignete Polycarboxylate sind beispielsweise die Natriumsalze der Polyacrylsäure oder der Polymethacrylsäure, beispielsweise solche mit einer relativen Molekülmasse von 800 bis 150.000 (auf Säure bezogen).

Geeignete copolymere Polycarboxylate sind insbesondere solche der Acrylsäure mit Methacrylsäure, Acrolein, Vinylacetat und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Das Verhältnis von Acrylat- zu Maleat-Einheiten in solchen Copolymeren kann bevorzugt von 30:1 bis etwa 1:1 betragen, besonders bevorzugt von etwa 10:1 bis 2:1. Ihre relative Molekülmasse, bezogen auf freie Säuren, beträgt im allgemeinen 2.000 bis 200.000, vorzugsweise 10.000 bis 120.000 und insbesondere 50.000 bis 100.000. Handelsübliche Produkte sind z: B. ^{®}Sokalan CP 5 und PA 30 von BASF, ^{®}Alcosperse 175 mal 177 von Alco, ^{®}LMW 45 von NorsoHAAS.

Bevorzugt wird als Polycarboxylat ein Homo- und/oder Copolymer aus Acrylsäure, Methacrylsäure, Maleinsäure, Polyasparaginsäure, Zuckercarbonsäure und/oder weiteren Monomeren eingesetzt.

Hierzu gehören die Homopolymere der Acrylsäure oder der Methacrylsäure bzw. deren Copolymere mit weiteren ethylenisch ungesättigten Monomeren wie beispielsweise Acrolein, Dimethylacrylsäure, Ethylacrylsäure, Vinylessigsäure, Allylessigsäure, Maleinsäure, Fumarsäure, Itaconsäure, Meth(allylsulfonsäure), Vinylsulfonsäure, Styrolsulfonsäure, Acrylamidomethylpropansulfonsäure, sowie Phosphorsäuregruppen enthaltende Monomere wie beispielsweise Vinylphosphonsäure, Allylphosphonsäure und Acrylamidomethylpropanphosphonsäure und deren Salze sowie Hydroxyethyl(meth)acrylatsulfate, Allylalkoholsulfate und -phosphate.

Für die erfindungsgemäße Anwendung sind insbesondere biologisch abbaubare Terpolymere geeignet, die sich durch Polymerisation von
a) 10 bis 70 Gew.-%monoethylenisch ungesättigten Dicarbonsäuren mit 4 bis 8 C-Atomen bzw. deren Salze
b) 20 bis 85 Gew.-% monoethylenisch ungesättigten Monocarbonsäuren mit 3 bis 10 C-Atomen bzw. deren Salze
c) 1 bis 50 Gew.-% einfach ungesättigte Monomere, welche nach der Verseifung Hydroxylgruppen an der Polymerkette freisetzen
d) 0 bis 10 Gew.-% weiterer, radikalisch copolymerisierbarer Monomere, wobei die Summe der Monomeren nach a) bis d) 100 Gew.-% beträgt, in wässriger Lösung und Verseifung der Monomere nach c) erhalten lassen.

Für die erfindungsgemäße Anwendung wird eine Verseifung im sauren Milieu bevorzugt.

Ebenfalls geeignet für die erfindungsgemäße Anwendung sind Pfropfpolymerisate von Monosacchariden, Oligosacchariden, Polysacchariden und modifizierten Polysacchariden. Pfropfpolymerisate mit Proteinen tierischen und pflanzlichen Ursprungs, insbesondere auch mit modifizierten Proteinen, sind ebenfalls für die erfindungsgemäße Anwendung gut geeignet.

Aus der Gruppe der Pfropfcopolymerisate werden bevorzugt Copolymerisate aus Zucker oder anderen Polyhydroxyverbindungen und einer Monomermischung der folgenden Zusammensetzung eingesetzt:
a) 45 bis 96 Gew.-% monoethylenisch ungesättigte C₃ bis C₁₀-Monocarbonsäure oder Mischungen von C₃ bis C₁₀-Monocarbonsäuren und/oder deren Salze mit einwertigen Kationen
b) 4 bis 55 Gew.-% monoethylenisch ungesättigte Monosulfonsäuregruppen enthaltende Monomere, monoethylenisch ungesättigte Schwefelsäureester, Vinylphosphonsäure und/oder die Salze dieser Säuren mit einwertigen Kationen
c) 0 bis 30 Gew.-% wasserlösliche, monoethylenisch ungesättigte Verbindungen, die mit 2 bis 50 Mol Alkylenoxid pro Mol monoethylenisch ungesättigter Verbindung modifiziert sind.

Weitere geeignet Polymere sind Polyasparaginsäuren bzw. deren Derivate in nicht oder nur teilneutralisierter Form. Üblicherweise fallen die Polyasparaginsäuren in Form ihrer Alkalimetall- oder Ammoniumsalze an. Man kann hieraus die nicht oder nur teilneutralisierten Produkte durch Zugabe entsprechender Mengen organischer oder anorganischer Säuren und ggf. Abtrennung der entstehenden Salze gewinnen.

Solche Produkte lassen sich auch durch die thermische Umsetzung von Maleinsäure und Ammoniak oder durch die Kondensation von Asparaginsäure und die anschließende Hydrolyse des entstandenen Polysuccinimids erhalten.

Besonders geeignet für die Herstellung einer löslichen Zinkverbindung einer Polycarbonsäure sind Pfropfpolymerisate von Acrylsäure, Methacrylsäure, Maleinsäure und weiteren ethylenisch ungesättigten Monomeren auf Salze der Polyasparaginsäure, wie sie üblicherweise bei der zuvor beschriebenen Hydrolyse des Polysuccinimids anfallen. Hierbei kann auf die sonst notwendige Zugabe von Säure zur Herstellung der nur teilneutralisierten Form der Polyasparaginsäure verzichtet werden. Die Menge an Polyaspartat wird üblicherweise so gewählt, dass der Neutralisationsgrad aller im Polymerisat eingebauter Carboxylgruppen, 80 %, vorzugsweise 60 %, nicht überschreitet.

Als bevorzugte Bereiche für die zuvor beschriebenen Polymere gelten:
Mittlere Molmasse: 1.000 bis 100.000 g/mol, bevorzugt 2.000 bis 70.000 g/mol und besonders bevorzugt 2.000 bis 35.000 g/mol.
Neutralisationsgrad der Säuregruppen: 0 bis 90 %, bevorzugt 30 bis 70 %. Wassergehalt der Polymerlösungen: 30 bis 70 Gew.-%, bevorzugt 40 bis 60 Gew.-%. Viskosität der Polymerlösungen: weniger als 2000 Pa*s bei 20°C.
Der pH-Wert der Polymerlösung sollte kleiner 5,5 sein.

Bevorzugte Hilfsmittel sind auch biologisch abbaubare Polymere mit mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Bevorzugte Hilfsmittel sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt.

Bevorzugte Polycarboxylate kommen in Form ihrer wasserlöslichen Salze, insbesondere in Form der Alkalimetalsalze, besonders der Natrium- und/oder Kaliumsalze, in Betracht.

Bevorzugte Polycarboxylate sind auch Terpolymere. Bevorzugte Terpolymere enthalten dabei 60 bis 95 Gew.-%, insbesondere 70 bis 90 Gew.-% (Meth)acrylsäüre bzw. (Meth)acrylat, besonders bevorzugt Acrylsäure bzw. Acrylat, und Maleinsäure bzw. Maleat sowie 5 bis 40 Gew.-%, vorzugsweise 10 bis 30 Gew.-% Vinylalkohol und/oder Vinylacetat. Ganz besonders bevorzugt sind dabei Terpolymere, in denen das Gewichtsverhältnis (Meth)acrylsäure bzw. (Meth)acrylat zu Maleinsäure bzw. Maleat zwischen 1 : 1 und 4 : 1, vorzugsweise zwischen 2 : 1 und 3 : 1 und insbesondere 2,1 und 2,5 : 1 liegt. Dabei sind sowohl die Mengen als auch die Gewichtsverhältnisse auf die Säuren bezogen.

Bevorzugte Polycarboxylate sind Terpolymere, die dabei 40 bis 60 Gew.-%, insbesondere 45 bis 55 Gew.-% (Meth)acrylsäure bzw. (Meth)acrylat enthalten, besonders bevorzugt Acrylsäure bzw. Acrylat, 10 bis 30 Gew.-%, vorzugsweise 15 bis 25 Gew.-% Methallylsulfonsäure bzw. Methallylsulfonat und als drittes Monomere bis 40 Gew.-%, vorzugsweise 20 bis 40 Gew.-% eines Kohlenhydrats. Dieses Kohlenhydrat kann dabei beispielsweise ein Mono-, Di-, Oligo-oder Polysaccharid sein, wobei Mono-, Di- oder Oligosaccharide bevorzugt sind, besonders bevorzugt ist Saccharose.

Bevorzugte Polycarboxylate sind Terpolymere, die eine relative Molekülmasse zwischen 1.000 und 200.000 aufweisen, vorzugsweise zwischen 200 und 50.000 und insbesondere zwischen 3.000 und 10.000.

Bevorzugte Polycarboxylate sind Terpolymere, die entweder vollständig oder zumindest partiell, insbesondere zu mehr als 50 %, bezogen auf die vorhandenen Carboxylgruppen, neutralisiert sind. Besonders bevorzugt ist dabei ein vollständig neutralisiertes Terpolymer das also aus den Salzen der monomeren Säuren, insbesondere den Natrium- oder Kaliumsalzen der monomeren Säuren, und Vinylalkohol oder einem Kohlenhydrat besteht.

Bevorzugte Hilfsmittel sind Polycarboxylate die entweder als Pulver oder als wässrige Lösung eingesetzt werden können, wobei 20 bis 55 gew.-%ige wässrige Lösungen bevorzugt sind.

Bevorzugte Hilfsmittel sind Polymere auf Basis von mindestens einem folgender Monomere oder Mischungen davon: Maleinsäure, Maleinsäureanhydrid, Methylstyrol, Styrol, Styrolsulfonsäure. Besonders bevorzugt sind dabei Homo- und Copolymere der Polystyrolsulfonsäure. Bevorzugt sind Polystyrolsulfonsäure-Homopolymere mit Molgewichten von 10.000 bis 1.200.000.

Bevorzugt sind Polystyrolsulfonsäure-Homopolymere als wässrige Lösungen mit 20 bis 50 Gew.-% Aktivsubstanz.

Bevorzugt sind Polystyrolsulfonsäure-Homopolymere als wässrige Lösungen mit Viskositäten von 5 bis 1600 mPa*s.

Bevorzugt sind Polystyrolsulfonsäure-Homopolymere als wässrige Lösungen mit pH-Werten von 7 bis 11.

Bevorzugt sind Polystyrolsulfonsäure-Maleinsäureanhydrid-Copolymere mit Molgewichten von 10.000 bis 1.200.000.
Bevorzugt sind Polystyrolsulfonsäure- Copolymere mit Molverhältnis von Stryolsulfonsäure zu Maleinsäure von 1:1 bis 4:1.

Als erfindungsgemäße Hilfsmittel einsetzbar sind u. a. auch Wasserglas, Vinylacetat-Polymere, Acrylate, Polymilchsäure, Stärke und Cellulose sowie filmbildende Bindemittel.

### Wasserglas

Bevorzugt sind wässrige Alkalisilicatlösungen mit einem Siliciumdioxid/Natriumoxid-Molverhältnis von 1 zu 2 bis 4 zu 1. Bevorzugt beträgt der Aktivsubstanzgehalt der Lösungen 5 bis 50 Gew.-%.

### Vinylacetat-Polymere

Bevorzugt sind Polymere auf Basis von mindestens einem folgender Monomere oder Mischungen davon: Vinylacetat, 2-Ethylhexylacrylat, Acrolein, Acrylester, Acrylsäure, Crotonsäure, Dibutylmaleat, Ethylen, Methylmetacrylat, n-Butylacrylat, N-hydroxymethylacrylamid, N-Vinylpyrrolidon, Styrol, tert-Butylchlorid, Vinylchlorid, Vinyllaurat, Vinylpropionat.

### Acrylate

Bevorzugt sind Polymere auf Basis von mindestens einem folgender Monomere oder Mischungen davon: Methacrylat, 1,2-Butadien, 1,3-Butadien, 2-Ethylhexylacrylat, Acrylamid, Acrylnitril, Acrylsäure, Ethylacrylat, Ethylmethacrylat, Isobutylacrylat, Isobutylmethacrylat, Laurylacrylat und/oder Methylmethacrylat, Methacrylamid Methacrylnitril, Methacrylsäure, n-Butylacrylat, n-Butylmethacrylat, n-Hexylacrylat, n-Hexylmethacrylat, n-Propylacrylat, sec-Butylacrylat, Styrol, tert-Butylacrylat, tert-Butylmethacrylat, Vinylacetat, Vinylchlorid, Vinylidenchlorid, Vinylpropionat.

### Polymilchsäure

Bevorzugt sind weiterhin Homopolymere der Milchsäure (Polylactide) oder Poly(lactid-caprolacton)-Copolymere, Poly(lactid-glycolid)-Copolymere, Poly(lactid-caprolacton-glycolid)-Terpolymere Poly(lactid-glycolid-ethylenglycol)-Terpolymere. Die bevorzugten Molekulargewichte sind 5.000 bis 150.000.

### Stärke und Cellulose

Weiterhin lassen sich lösliche Stärkepräparate und andere als die oben genannten Stärkeprodukte verwenden, z. B. abgebaute Stärke, Aldehydstärken usw. Carboxyalkylcellulose (Na-Salz), Hydroxyethylcellulose, Hydroxypropylcellulose, Alkylcellulose, Alkylhydroxyethylcellulose und Alkyl ist bevorzugt Methyl.

Hilfsmittel sind auch Homopolymerisate auf Basis Vinylacetat, Copolymerisate auf Basis Vinylacetat, Ethylen und Vinylchlorid, Copolymerisate auf Basis Vinylacetat und einem Vinylester einer langkettigen, verzweigten Carbonäsure, Copolymerisate auf Basis Vinylacetat und Maleinsäure-di-n-Butylester, Copolymerisate auf Basis Vinylacetat und Acrylsäureester, Copolymerisate auf Basis Styrol und Acrylsäureester, Copolymerisate auf Basis Acrylat/Vinyltoluol, Copolymerisate auf Basis Acrylat/Styrol, Copolymerisate auf Basis Acrylat/Vinyl und/oder selbstvernetzende Polyurethan-Dispersionen.

### Verfahren zur Herstellung des Agglomerates

Die Erfindung betrifft auch ein Verfahren zur Herstellung von phosphorhaltigen thermostabilisierten Flammmittelagglomeraten, dadurch gekennzeichnet, dass man Aggregate und/oder Primärteilchen von
a) einem Phosphinsäuresalz der Formel (I) und/oder von einem Diphosphinsäuresalz der Formel (II) und/oder von deren Polymeren und ggf.
b) mindestens einem Synergisten in Gegenwart
c) eines Hilfsmittels und ggf.
d) eines Granulierhilfsmittels agglomeriert
und wahlweise das Granulierhilfsmittel entfernt
und wahlweise Agglomerate geeigneter Größe aussortiert
und wahlweise Agglomerate nicht geeigneter Größe aufbereitet und in den Agglomerier-Prozess zurückführt.

Die Komponenten a bis d) können in einem Arbeitsgang gemischt und granuliert werden oder in verschiedenen getrennten Arbeitsgängen in beliebiger Abfolge.

Bevorzugt ist bei der Granulierung ein spezifischer Energieeintrag von 0,1 bis 0,4 kW/kg.

Die Agglomeration erfolgt einstufig oder mehrstufig bevorzugt bei einem Druck von 10 bis 100.000.000 Pa, über eine Zeitdauer von 0,01 bis 1.000 h und einer Temperatur von -20 bis +500°C, besonders bevorzugt bei 50 bis 350°C.

Das Granulierhilfsmittel ist bevorzugt mindestens ein Vertreter aus der Gruppe Alkohole, Ketone, Kohlenwasserstoffe, Wasser.

Bevorzugt ist der Zusatz von 5 bis 50 Gew.-% Granulierhilfsmittel bezogen auf trockener Feststoff, besonders bevorzugt 10 bis 40 Gew.-%.

Die Agglomerierung erfolgt bevorzugt in Mischern des Typs Doppelkonusmischer der Fa. TELSCHIG Verfahrenstechnik GmbH, Doppelwellen-Paddelmischer Fa. Eirich, Flexomix-Mischertypen der Fa. Schugi, Fliessbettmischer der Fa. TELSCHIG Verfahrenstechnik GmbH, Fluidmischer der Fa. Thyssen Henschel Industrietechnik GmbH, Freifallmischer der Firmen TELSCHIG Verfahrenstechnik GmbH (Typ WPA6) oder Hauf, Intensivmischer - Mischer der Fa. Eirich (z.B. Typ R02, R 12, DE 18, Evactherm, Kegelschneckenmischer der Fa. Nauta, in denen das Mischgut nach dem Archimedes-Prinzip durch eine Schnecke umwälzt wird, Kühlmischer der Firmen Papenmeier oder Thyssen Henschel Industrietechnik GmbH, Luftstrahlmischer der Fa. TELSCHIG Verfahrenstechnik GmbH, Pflugscharmischertypen der Firmen Lödige (Typen M5 oder M20 ), TELSCHIG Verfahrenstechnik GmbH, oder Minox (Typen PSM 10 bis 10.000), Planeten-Mischmaschinen der Fa. Hobart, Ringspalt- und Ringschichtmischer der Firmen Lödige, (z.B. Typ CB30, CB Konti-Mischer), Niro (Typ HEC), Drais/Mannheim (z.B. Typ K-TTE4), Sprühmischer der Fa. TELSCHIG Verfahrenstechnik GmbH, Taumel- bzw. Container-Mischer z.B. der Fa. Thyssen Henschel Industrietechnik GmbH, Zig-Zag-Mischer der Fa. Niro.

Das erfindungsgemäße Verfahren kann sowohl in Hochintensitäts- als auch in langsamlaufenden Mischern durchgeführt werden.

Die Hochintensitätsmischer können in einer ersten Verfahrensstufe langsamlaufend betrieben werden und der für eine zweite Verfahrensstufe benötigte Energieeintrag bei den langsamlaufenden Mischern durch Zusatzaggregate wie beispielsweise Messerkränze erbracht werden.

Beispiele für schnelllaufende Mischer sind der Lödige^{™} CB 30 Recycler, der Schugi^{™} Granulator, der Schugi^{™} Flexomix, der Eirich^{™} -Mischer Typ R oder der Drais^{™} K-TTP 80.

Beispiele für langsamlaufende Mischgranulatoren sind der Drais^{™} K-T 160 sowie der Lödige^{™} KM 300. Letzterer wird oftmals als Lödige Pflugscharmischer bezeichnet. Geeignete Pflugscharmischer weisen als Umlaufgeschwindigkeit der Mischorgane vorzugsweise Geschwindigkeiten zwischen 2 und 7 m/s auf, während andere geeignete Mischer Umlaufgeschwindigkeiten von 3 bis 50 m/s, insbesondere zwischen 5 und 20 m/s aufweisen.

Das Granulierhilfsmittel wird bevorzugt durch Trocknen entfernt. Bevorzugt sind Konvektivtrockner mit Trockenmittelstrom über das Trockengut, z.B. Kammertrockner, Kanaltrockner, Bandtrockner, Mischtrockner (Etagentrockner, Trommeltrockner, Schaufeltrockner).

Bevorzugt sind Konvektivtrockner mit Trockenmittelstrom durch das Trockengut, z.B. Darren (Rosttrockner), Kammer-Hordentrockner, Schaufeltrockner(Schleudertrockner), Mahltrockner.

Bevorzugt sind Konvektivtrockner mit Trockenmittelstrom um das Trockengut, z.B. Schwebetrockner (Stromtrockner, Fließbetttrockner, Zyklontrockner, Sprühtrockner), Kugelbett-Trockner (Trägerkugeltrockner).

Bevorzugt sind Kontakttrockner, z.B. Schranktrockner, Dünnschichttrockner (Drallrohrtrockner, Walzentrockner, Schneckenverdampfer), Mischtrockner (Röhrentrockner, Etagen-Trommeltrockner, Schaufeltrockner).

Bevorzugt sind Vakuumtrockner, z.B. Vakuumtrockenschränke, Vakuumwalzentrockner, Vakuumschaufeltrockner.

Die Gas-Einlasstemperatur zu den Trocknern beträgt 50 bis 320°C, bevorzugt 60 bis 250°C, die Austrittstemperatur ist bevorzugt 25 bis 180°C.

Die Agglomerate geeigneter Größe werden durch die Klassierungsverfahren nach dem Stand der Technik (Sieben, Sichten etc) aussortiert.

Die Aufbereitung nicht korngrößengeeigneter Agglomerate wird bevorzugt durch Mahlen bewerkstelligt.

Flammgeschützte Polymerformmasse Die Erfindung betrifft auch eine flammgeschützte Polymerformmasse, die die erfindungsgemäße phosphorhaltigen thermostabilisierten Flammmittelagglomerate enthält.

Bevorzugt enthält die flammgeschützte Polymerformmasse
1 bis 50 Gew.-% phosphorhaltige thermostabilisierte Flammschutzmittelagglomerate,
1 bis 99 Gew.-% Polymer oder Mischungen derselben
0 bis 60 Gew.-% Additive
0 bis 60 Gew.-% Füllstoff.

Besonders bevorzugt enthält die flammgeschützte Polymerformmasse
5 bis 30 Gew.-% phosphorhaltige thermostabilisierte Flammschutzmittelagglomerate, 5 bis 90 Gew.-% Polymer oder Mischungen derselben
5 bis 40 Gew.-% Additive
5 bis 40 Gew.-% Füllstoff.

Bevorzugt handelt es sich bei dem Polymer um ein thermoplastisches oder duroplastisches Polymer.

Bevorzugt handelt es sich bei den duroplastischen Polymeren um Formaldehyd-, Epoxid-, Melamin- Phenolharz-Polymere und/oder Polyurethane.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol).

Insbesondere handelt es sich bei den thermoplastischen Polymeren um Polyamid, Polyester oder ABS.

### Flammgeschützter Polymerformkörper

Die Erfindung betrifft auch Polymer-Formkörper, -Filme, -Fäden und -Fasern, die die erfindungsgemäßen phosphorhaltigen thermostabilisierten Flammmittelagglomerate und/oder die erfindungsgemäßen flammgeschützten Polymerformmassen enthalten.

Bevorzugt enthalten die Polymer-Formkörper, -Filme, -Fäden und -Fasern
1 bis 50 Gew.-% phosphorhaltige thermostabilisierte Flammschutzmittelagglomerate
1 bis 99 Gew.-% Polymer oder Mischungen derselben
0 bis 60 Gew.-% Additive
0 bis 60 Gew.-% Füllstoff.

Besonders bevorzugt enthalten die Polymer-Formkörper, -Filme, -Fäden und -Fasern 5 bis 30 Gew.-% phosphorhaltige thermostabilisierte Flammschutzmittelagglomerate 5 bis 90 Gew.-% Polymer oder Mischungen derselben
5 bis 40 Gew.-% Additive
5 bis 40 Gew.-% Füllstoff.

### Bestimmung der Kornverteilung durch Siebanalyse

In eine Siebmaschine der Fa. Retsch werden die Einsätze mit gewünschten Sieben eingesetzt. Dabei nimmt die Maschenweite der Siebe von oben nach unten ab 50 g des zu untersuchenden Pulvers werden auf das weiteste Sieb aufgegeben. Durch die Schwingbewegung der Siebmaschine wird das Pulvermaterial durch die verschiedenen Siebe befördert. Die Rückstände auf den Sieben werden ausgewogen und rechnerisch auf die Materialeinwaage bezogen. Aus den Werten können d₅₀-(mittlerer Teilchendurchmesser) und d₉₀-Werte berechnet werden.

### Bestimmung der Farbwerte

Das zu untersuchende Granulat wird 15 min in einem Muffelofen bei 280°C wärmebehandelt. Danach wird mit einem Farbmessgerät des Types ^{®}Luci 100 der Fa. Dr. Lange der Weißgrad bestimmt. Die Farbwerte werden im System nach Hunter (CIE-LAB-System) angegeben. L-Werte gehen von 0 (schwarz) bis 100 (weiß), a-Werte von -a (grün) bis +a (rot) und b-Werte von -b (blau) bis +b (gelb). Je größer negativ der b-Wert also ist, desto intensiver blau ist das untersuchte Material.

### Abrieb

Die Probe wird mit einem Vibrationsrüttler VE 1000 der Firma Retsch 2 min bei einer Amplitude von 2 mm ohne Intervall über ein 0,2 mm Sieb abgesiebt. Die Probenmenge soll so gewählt werden, dass nach der Siebung mindestens 50 g von Material gröber als 200 µm vorhanden ist. 50 g der Fraktion, die gröber als 200 µm ist, werden auf 0,1 g genau in ein 200 µm-Sieb eingewogen. 18 Stahlkugeln (Durchmesser 10 mm, Gesamtgewicht 72,8 g) werden dazugegeben, anschließend wird die Siebmaschine gestartet für 5 min bei einer Amplitude von 2 mm ohne Intervall. Nach der Mahlung werden die Stahlkugeln entfernt und die gesamte Probe auf ein 200 µm-Sieb gegeben und erneut 2 min bei einer Amplitude von 2 mm ohne Intervall gesiebt. Der prozentuale Anteil von Material, das feiner als 200 µm ist, ergibt den Abrieb.

### Beispiel 1 (Vergleich)

In einem 201-Pflugscharmischer der Fa. Lödige werden 3,920 g Aluminiumphosphinat vorgelegt. Bei Raumtemperatur werden 0,080 kg PVA, das in 1,333 kg Wasser gelöst ist, während 15 min aufgedüst. Dies geschieht unter kontinuierlichem Mischen bei Nenndrehzahl (ca. 230 U/min) und eingeschalteten Messerköpfen. Dann wird 5 min nachgemischt. Das Produkt wird in einem Labortrockner der Fa. Retsch 60 min bei 120°C Lufteintrittstemperatur getrocknet, dann durch zwei Siebe (200 µm und 1700 µm) gesiebt. Gutprodukt ist die Kornfraktion größer 200 µm und unter 1700 µm.

### Beispiel 2

Wie in Beispiel 1 wird aus 3,920 g Aluminiumphosphinat und 0,178 kg PCA, das in 1,236 kg Wasser gelöst ist, durch Mischen, Trocknen und Sieben ein Agglomerat hergestellt.

### Beispiel 3 (Vergleich)

In einem Mischer der Fa. Schugi (Typ Flexomix 160) mit nachgeschaltetem Batch-Fließbett werden während einer Stunde 1470 kg einer Mischung aus 67 Gew.-% Aluminiumphosphinat und 33 Gew.-% Synergist 1 und eine Lösung von 30 kg PVA in 448 kg Wasser miteinander vermischt und auf den gewünschten Feuchtegehalt nachgetrocknet (Lufteintrittstemperatur 150°C). Das Produkt wird mit einem Allgaier-Sieb durch ein 800 µm-Sieb und über ein 200 µm-Sieb abgesiebt.

### Beispiel 4

Wie in Beispiel 4 wird aus 1470 kg einer Mischung aus 67 Gew.-% Aluminiumphosphinat und 33 Gew.-% Synergist 1 und einer Lösung von 67 kg PCA in 411 kg Wasser durch Mischen, Trocknen und Sieben ein Agglomerat hergestellt.

### Beispiel 5 (Vergleich)

Auf einem Granulierteller mit ca. 70 cm Durchmesser werden 0,376 kg einer Mischung von 10 Gew.-% Aluminiumphosphinat und 90 Gew.-% Synergist 1 vorgelegt und durch Aufsprühen einer Lösung von 0,050 kg PAS in 0,264 kg Wasser granuliert. Die Drehgeschwindigkeit des Tellers beträgt 70 U/min, der Anstellwinkel 70 bis 75 Grad, es herrscht Raumtemperatur. Das Produkt wird in einem Labortrockner der Fa. Retsch 60 min bei 120°C Lufteintrittstemperatur getrocknet, dann durch zwei Siebe (600 µm und 3.000 µm) gesiebt. Gutprodukt ist die Kornfraktion größer 600 µm und kleiner 3.000 µm.

### Beispiel 6

Wie in Beispiel 1 wird aus 3,978 kg einer Mischung von 90 Gew.-% Aluminiumphosphinat und 10 Gew.-% Synergist 1 und einer Lösung von 0,067 kg PSS, das in 1,668 kg Wasser gelöst ist, durch Mischen, Trocknen und Sieben ein Agglomerat hergestellt.

### Beispiel 7

Wie in Beispiel 1 wird aus 3,962 kg einer Mischung von 64 Gew.-% Aluminiumphosphinat, 31 Gew.-% Synergist 1 und 5 Gew.-% Synergist 2 und einer Lösung von 0,160 kg PMS, das in 1,594 kg Wasser gelöst ist, durch Mischen, Trocknen und Sieben ein Agglomerat hergestellt.

### Beispiel 8

Wie in Beispiel 5 wird aus 0,380 g einer Mischung von 92 Gew.-% Aluminiumphosphinat und 10 Gew.-% Synergist 2 und einer Lösung von 0,054 kg Na 4/1, das in 0,263 kg Wasser gelöst ist, durch Mischen, Trocknen und Sieben ein Agglomerat hergestellt.

### Beispiel 9 (Vergleich)

In einem Lödige Pflugscharmischer werden 2,626 kg Aluminiumphosphinat und 1,294 kg Synergist gemischt. Danach werden wie in Beispiel 1 durch Aufsprühen von 0,402 kg AM, das in 1,952 kg Wasser gelöst ist und weiteres Trocknen und Sieben, ein Agglomerat hergestellt.

### Beispiel 10 (Vergleich)

In einem 20 1-Pflugscharmischer der Fa. Lödige werden 1,280 kg Aluminiumphosphinat und 2,640 kg Synergist 1 gemischt. Bei Raumtemperatur werden 2,135 kg Wasser während 15 min aufgesprüht. Dann werden während 5 min 0,039 kg EVA zudosiert. Dies geschieht unter kontinuierlichem Mischen bei Nenndrehzahl (ca. 230 U/min) und eingeschalteten Messerköpfen. Dann wird 5 min nachgemischt. Das Produkt wird in einem Labortrockner der Fa. Retsch 60 min bei 120°C Lufteintrittstemperatur getrocknet, dann durch zwei Siebe (200 µm und 1700 µm) gesiebt. Gutprodukt ist die Kornfraktion größer 200 µm und kleiner 1700 µm.

Es wurde gefunden, dass mit der Wahl eines geeigneten Hilfsmittels, wie aus dem Vergleich der Farbwerte der Beispiele 1 und 3 (Vergleichsbeispiele) mit den Farbwerten der erfindungsgemäßen Beispiele **2, 4, 6, 7 und 8** die Verfärbung beim Erhitzen der phosphorhaltigen Flammschutzmittelagglomerate weitgehend verhindert werden kann. In den erfindungsgemäßen Beispielen ergibt sich dies aus den hohen Werten für die L-Farbwerte (erfindungsgemäßer Bereich: 80 bis 99,9, besonders bevorzugt 85 bis 98) und den geringen Werten für die a- und b-Farbwerte (erfindungsgemäß Bereiche: a-Farbwerte von -2 bis +2, besonders bevorzugt -1 bis +1,5 und für die b-Farbwerte von -2 bis +8, besonders bevorzugt -1 bis +7.

**Tabelle 1**

| | Beispiel | | 1 Vgl. | 2 | 3 Vgl. | 4 | 5 **Vgl.** | 6 | 7 | 8 | 9 **Vgl.** | 10 **Vgl.** |
|---|---|---|---|---|---|---|---|---|---|---|---|---|
| Komponente A | Aluminiumphosphinat | [Gew.-%] | 98 | 98 | 66 | 66 | 9,5 | 89,6 | 63 | 85,5 | 66 | 32 |
| Komponente B | Synergist 1 | [Gew.-%] | | | 32 | 32 | 84,5 | 9,9 | 31 | | 32 | 66 |
| Komponente C | Synergist 2 | [Gew.-%] | | | | | | | 5 | 9,5 | | |
| Komponente D | PVA | [Gew.-%] | 2 | | 2 | | | | | | | |
| | PCA | [Gew.-%] | | 2 | | 2 | | | | | | |
| | PAS | [Gew.-%] | | | | | 5 | | | | | |
| | PSS | [Gew.-%] | | | | | | 0,5 | | | | |
| | PSM | [Gew.-%] | | | | | | | 1 | | | |
| | Na 4/1 | [Gew.-%] | | | | | | | | 5 | | |
| | AM | [Gew.-%] | | | | | | | | | 0, 5 | |
| | EVA | [Gew.-%] | | | | | | | | | | 0,5 |
| | Weißgrad | L-Wert | 70,93 | 94,9 | 74,4 | 88,35 | 93,93 | 93,09 | 92,95 | 95,87 | 92,7 | 93,0 |
| | Weißgrad | a-Wert | 4,74 | 0,06 | 3,26 | 1,05 | 0,27 | 0,25 | -0,49 | 0,03 | 0,4 | 0,1 |
| | Weißgrad | b-Wert | 12,97 | 0,31 | 10,57 | 6 | 1,59 | 2,99 | 2,87 | 0,22 | 3,6 | 1,3 |
| | Restfeuchte | [Gew.-%] | 0,2 | 0,3 | 0,3 | 0,6 | 0,5 | 0,4 | 0,3 | 0,3 | 0,4 | 0,4 |
| | Abrieb | [%] | 71 | 34 | 57 | 75 | 83 | 81 | 87 | 95 | 77 | 63 |

**Tabelle 2**

| | Beispiel | | 1 Vgl. | 2 | 3 Vgl. | 4 | 5 **Vgl.** | 6 | 7 | 8 | 9 **Vgl.** | 10 **Vgl.** |
|---|---|---|---|---|---|---|---|---|---|---|---|---|
| Komponente A | Aluminiumphosphinat | [kg] | 3,920 | 3,920 | | | | | | | 2,626 | 1,280 |
| | Mischung Aluminium-phosphinat und Synergisten | [kg] | | | 1470 | 1470 | 0,376 | 3,978 | 3,962 | 0,380 | | |
| Komponente B | Synergist 1 | | | | | | | | | | 1,294 | 2,640 |
| | Wasser | [kg] | 1,333 | 1,236 | 448 | 411 | 0,264 | 1,668 | 1,594 | 0,263 | 1,952 | 2,135 |
| Komponente D | PVA | [kg] | 0,080 | | 30 | | | | | | | |
| | PCA | [kg] | | 0,178 | | 67 | | | | | | |
| | PAS | [kg] | | | | | 0,050 | | | | | |
| | PSS | [kg] | | | | | | 0,067 | | | | |
| | PSM | [kg] | | | | | | | 0,160 | | | |
| | Na 4/1 | [kg] | | | | | | | | 0,054 | | |
| | AM | [kg] | | | | | | | | | 0,402 | |
| | EVA | [kg] | | | | | | | | | | 0,039 |

### Verwendete Chemikalien

- Aluminiumphosphinat: ^{®}Exolit OP1230 der Fa. Clariant GmbH
- AM: wässrige Acrylsäureester-Methacrylsäureester-Polymer-Dispersion, 49,8 %, ^{®}Acronal 18D, Fa. BASF
- EVA: wässrige Ethylen-Acrylsäureester-Vinylacetat-Terpolymer-Dispersion, ca. 51 Gew.-%, ^{®}Airflex EAF375, Fa. Air
- Products Na 4/1: Wässrige Natriumsilicatlösung, 8,3 Gew.-% Na₂O, 28,18 Gew.-% SiO₂, Fa. Clariant France
- PAS: Polyacrylsäure, Natriumsalz MW = 30.000 40 Gew.-% wässrige Lösung, Fa. Sigma-Aldrich
- PCA: Acryl/Maleinsäure-Copolymer, Natriumsalz MW = 50.000 ^{®}Sokalan CP 5, 45 Gew.-% Lösung, Fa. BASF
- PSM: (4-Styrolsulfonsäuremaleinsäure)-copolymer, Natriumsalz MW = 20.000 25 Gew.-% wässrige Lösung, Fa. Sigma-Aldrich
- PSS: Poly-(4-Styrolsulfonat), Natriumsalz 30 Gew.-% wässrige Lösung, Fa. Sigma-Aldrich
- PVA: Polyvinylalkohol, ^{®}Mowiol 3-85, Fa. Kuraray
- Synergist 1: ^{®}Melapur 200-70, Fa. Ciba SC
- Synergist 2: ^{®}Firebrake 500, Fa. Borax

## Patentansprüche

1. Phosphorhaltige thermostabilisierte Flammschutzmittelagglomerate, enthaltend als Komponente A 6 bis 99,99 Gew.-% Aggregate und/oder Primärteilchen von einem Phosphinsäuresalz der Formel (I) und/oder von einem Diphosphinsäuresalz der Formel (II) und/oder von deren Polymeren, 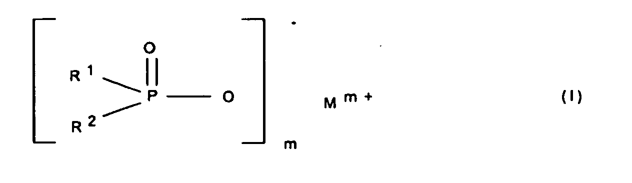 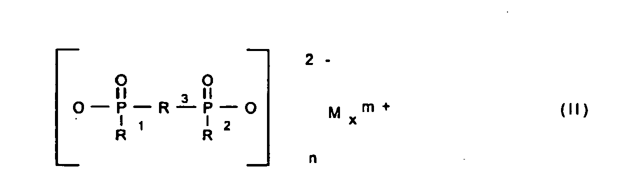 worin
R¹, R² gleich oder verschieden sind und C1-C6-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Zn, Ti, Fe, Zr, Ce, Bi, Sr, Mn, Li, Na, K und/oder eine protonierte Stickstoffbase;
m 1 bis 4; n 1 bis 4; x 1 bis 4 bedeuten;
als Komponente B 0 bis 90 Gew.-% eines Synergisten
als Komponente C 0 bis 20 Gew.-% Verbindungen der Elemente Calcium, Magnesium und/oder Zink und
als Komponente D 0,01 bis 20 Gew.-% Hilfsmittel, wobei es sich bei dem Hilfsmittel um Polystyrolsulfonsäure, Polystyrolsulfonsäure-Maleinsäureanhydrid-Copolymere und/oder Wasserglas und/oder Homopolymere oder gemischte Polymere basierend auf mindestens einem Monomer aus der Gruppe Maleinsäure und/oder Styrolsulfonsäure handelt.

2. Phosphorhaltige thermostabilisierte Flammschutzmittelagglomerate nach Anspruch 1, **dadurch gekennzeichnet, dass** sie
6 bis 99,9 Gew.-% an Komponente A
6 bis 90 Gew.-% an Komponente B
0 bis 20 Gew.-% an Komponente C
0,01 bis 20 Gew.-% an Komponente D
enthalten.

3. Phosphorhaltige thermostabilisierte Flammschutzmittelagglomerate nach Anspruch 1 oder 2, **dadurch gekennzeichnet, dass** sie
6 bis 99,89 Gew.-% an Komponente A
6 bis 90 Gew.-% an Komponente B
0,1 bis 20 Gew.-% an Komponente C
0,01 bis 20 Gew.-% an Komponente D
enthalten.

4. Phosphorhaltige thermostabilisierte Flammschutzmittelagglomerate nach einem oder mehreren der Ansprüche 1 bis 3, **dadurch gekennzeichnet, dass** sie
20 bis 98,9 Gew.-% an Komponente A
20 bis 74 Gew.-% an Komponente B
1 bis 10 Gew.-% an Komponente C
0,1 bis 5 Gew.-% an Komponente D
enthalten.

5. Phosphorhaltige thermostabilisierte Flammschutzmittelagglomerate nach einem oder mehreren der Ansprüche 1 bis 4, **dadurch gekennzeichnet, dass** es sich bei der Komponente B um Melaminphosphat, Melaminpyrophosphat, Melaminpolyphosphate, Melampolyphosphate, Melempolyphosphate, Melonpolyphosphate, Melamincyanurat und/oder Melaminkondensationsprodukte wie Melam, Melem und/oder Melon handelt.

6. Phosphorhaltige thermostabilisierte Flammschutzmittelagglomerate nach einem oder mehreren der Ansprüche 1 bis 5, **dadurch gekennzeichnet, dass** es sich bei der Komponente C um Magnesiumhydroxid, Magnesiumcarbonat, Magensiumborat, Calciumcarbonat, Calciumborat, Calciumpyroborat, Zinkoxid, Zinkhydroxid, Zinkborat, Zinkphosphat und/oder Zinkpyrophosphat handelt.

7. Flammgeschützte Polymerformmasse, enthaltend
1 bis 50 Gew.-% phosphorhaltige thermostabilisierte Flammschutzmittelagglomerate nach mindestens einem der Ansprüche 1 bis 6,
1 bis 99 Gew.-% Polymer oder Mischungen derselben
0 bis 60 Gew.-% Additive
0 bis 60 Gew.-% Füllstoff.

8. Flammgeschützte Polymer-Formkörper, -Filme, -Fäden und -Fasern, enthaltend
1 bis 50 Gew.-% phosphorhaltige thermostabilisierte Flammschutzmittelagglomerate nach mindestens einem der Ansprüche 1 bis 6,
1 bis 99 Gew.-% Polymer oder Mischungen derselben
0 bis 60 Gew.-% Additive
0 bis 60 Gew.-% Füllstoff.

9. Flammgeschützte Polymer-Formkörper, -Filme, -Fäden und -Fasern, enthaltend 60 bis 98 Gew.-% flammgeschützte Polymerformmasse nach Anspruch 7, 2 bis 40 Gew.-% Polymer oder Mischungen derselben.

## Claims

1. A phosphorus-containing thermally stabilized flame retardant agglomerate, comprising as component A from 6 to 99.99% by weight of aggregates and/or primary particles composed of a phosphinic salt of the formula (I) and/or of a diphosphinic salt of the formula (II), and/or of their polymers, 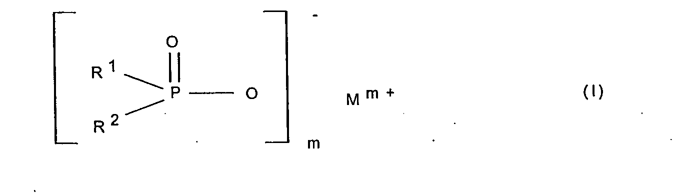 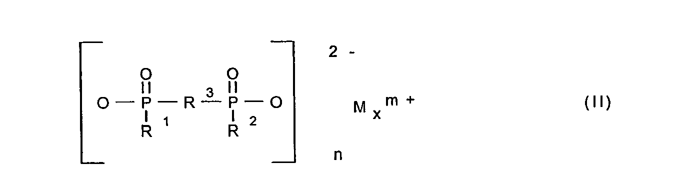 where
R¹ and R² are identical or different and are C1-C6-alkyl, linear or branched, and/or aryl;
R³ is C₁-C₁₀-alkylene, linear or branched, C₆-C₁₀-arykene, -alkylarylene, or -arylalkylene;
M is Mg, Ca, Al, Sb, Sn, Ge, Zn, Ti, Fe, Zr, Ce, Bi, Sr, Mn, Li, Na, K, and/or a protonated nitrogen base;
m is from 1 to 4; n is from 1 to 4; and x is from 1 to 4;
as component B from 0 to 90% by weight of a synergist
as component C from 0 to 20% by weight of compounds of the elements calcium, magnesium, and/or zinc, and
as component D from 0.01 to 20% by weight of auxiliary, where the auxliary is polystyrenesulfonic acid, polystyrenesulfonic acid-maleic anhydride copolymers, and/or waterglass, and/or homopolymers or mixed polymers based on at least one monomer from the group of maleic acid and/or styrenesulfonic acid.

2. The phosphorus-containing thermally stabilized flame retardant agglomerate as claimed in claim 1, which comprises
from 6 to 99.9% by weight of component A
from 6 to 90% by weight of component B
from 0 to 20% by weight of component C
from 0.01 to 20% by weight of component D.

3. The phosphorus-containing thermally stabilized flame retardant agglomerate as claimed in claim 1 or 2, which comprises
from 6 to 99.89% by weight of component A
from 6 to 90% by weight of component B
from 0.1 to 20% by weight of component C
from 0.01 to 20% by weight of component D.

4. The phosphorus-containing thermally stabilized flame retardant agglomerate as claimed in one or more of claims 1 to 3, which comprises
from 20 to 98.9% by weight of component A
from 20 to 74% by weight of component B
from 1 to 10% by weight of component C
from 0.1 to 5% by weight of component D.

5. The phosphorus-containing thermally stabilized flame retardant agglomerate as claimed in one or more of claims 1 to 4, wherein component B is melamine phosphate, melamine pyrophosphate, melamine polyphosphates, melam polyphosphates, melem polyphosphates, melon polyphosphates, melamine cyanurate, and/or melamine condensates, such as melam, melem, and/or melon.

6. The phosphorus-containing thermally stabilized flame retardant agglomerate as claimed in one or more of claims 1 to 5, wherein component C is magnesium hydroxide, magnesium carbonate, magnesium borate, calcium carbonate, calcium borate, calcium pyroborate, zinc oxide, zinc hydroxide, zinc borate, zinc phosphate, and/or zinc pyrophosphate.

7. A flame-retardant polymer molding composition, comprising from 1 to 50% by weight of phosphorus-containing thermally stabilized flame retardant agglomerates as claimed in at least one of claims 1 to 6,
from 1 to 99% by weight of polymer or a mixture of these
from 0 to 60% by weight of additives
from 0 to 60% by weight of filler.

8. A flame-retardant polymer molding, flame-retardant polymer film, flame-retardant polymer filament, or flame-retardant polymer fiber comprising from 1 to 50% by weight of phosphorus-containing thermally stabilized flame retardant agglomerates as claimed in at least one of claims 1 to 6,
from 1 to 99% by weight of polymer or a mixture of these
from 0 to 60% by weight of additives
from 0 to 60% by weight of filler.

9. The flame-retardant polymer molding, flame-retardant polymer film, flame-retardant polymer filament, or flame-retardant polymer fiber, comprising from 60 to 98% by weight of flame-retardant polymer molding composition as claimed in claim 7, from 2 to 40% by weight of polymer or a mixture of these.

## Revendications

1. Agglomérats d'agents ignifuges phosphorés, thermostabilisés, contenant en tant que composant A de 6 à 99,99 % en poids d'agrégats et/ou de particulaires primaires d'un sel d'acide phosphinique de formule (I) et/ou d'un sel d'acide diphosphinique de formule (II) et/ou de leurs polymères, 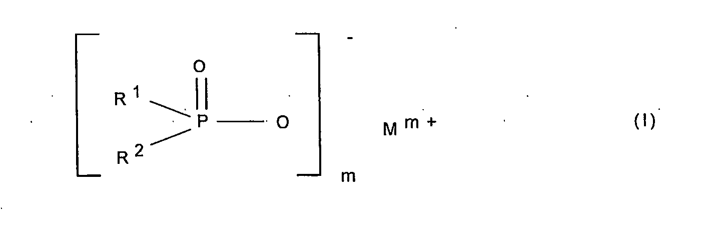 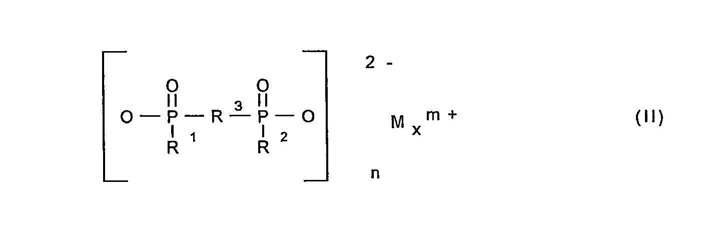 formules dans lesquelles
R¹, R² sont identiques ou différents et représentent un groupe alkyle en C₁-C₆, linéaire ou ramifié et/ou un groupe aryle ;
R³ représente un groupe alkylène en C₁-C₁₀ linéaire ou ramifié, arylène en C₆-C₁₀, alkylarylène en C₆-C₁₀ ou arylalkylène en C₆-C₁₀;
M représente Mg, Ca, Al, Sb, Sn, Ge, Zn, Ti, Fe, Zr, Ce, Bi, Sr, Mn, Li, Na, K et/ou une base azotée protonée ;
m va de 1 à 4 ; n va de 1 à 4 ; x va de 1 à 4 ;
en tant que composant B, 0 à 90 % en poids d'un agent synergique ;
en tant que composant C, 0 à 20 % en poids de composés des éléments calcium, magnésium et/ou zinc et
en tant que composant D 0,01 à 20 % en poids d'adjuvant, l'adjuvant consistant en poly(acide styrènesulfonique), copolymères poly(acide styrènesulfonique)/anhydride maléique et/ou orthosilicate et/ou homopolymères ou polymères mixtes à base d'au moins un monomère choisi dans le groupe constitué par l'acide maléique et/ou l'acide styrènesulfonique.

2. Agglomérats d'agents ignifuges phosphorés, thermostabilisés, selon la revendication 1, **caractérisés en ce qu'**ils contiennent
6 à 99,9 % en poids de composant A
6 à 90 % en poids de composant B
0 à 20 % en poids de composant C
0,01 à 20 % en poids de composant D.

3. Agglomérats d'agents ignifuges phosphorés, thermostabilisés, selon la revendication 1 ou 2, **caractérisés en ce qu'**ils contiennent
6 à 99,89 % en poids de composant A
6 à 90 % en poids de composant B
0,1 à 20 % en poids de composant C
0,01 à 20 % en poids de composant D.

4. Agglomérats d'agents ignifuges phosphorés, thermostabilisés, selon une ou plusieurs des revendications 1 à 3, **caractérisés en ce qu'**ils contiennent
20 à 98,9 % en poids de composant A
20 à 74 % en poids de composant B
1 à 10 % en poids de composant C
0,1 à 5 % en poids de composant D.

5. Agglomérats d'agents ignifuges phosphorés, thermostabilisés, selon une ou plusieurs des revendications 1 à 4, **caractérisés en ce que** le composant B consiste en phosphate de mélamine, pyrophosphate de mélamine, polyphosphates de mélamine, polyphosphates de melam, polyphosphates de melem, polyphosphates de melon, cyanurate de mélamine et/ou produits de condensation de mélamine, tels que le melam, le melem et/ou le melon.

6. Agglomérats d'agents ignifuges phosphorés, thermostabilisés, selon une ou plusieurs des revendications 1 à 5, **caractérisés en ce que** le composant C consiste en hydroxyde de magnésium, carbonate de magnésium, borate de magnésium, carbonate de calcium, borate de calcium, pyroborate de calcium, oxyde de zinc, hydroxyde de zinc, borate de zinc, phosphate de zinc et/ou pyrophosphate de zinc.

7. Matière à mouler polymère ignifugée contenant
1 à 50 % en poids d'agglomérats d'agents ignifuges phosphorés, thermostabilisés, selon au moins l'une des revendications 1 à 6,
1 à 99 % en poids de polymère ou de mélanges de tels polymères,
0 à 60 % en poids d'additifs,
0 à 60 % en poids de charge.

8. Corps moulés, films, fils et fibres en polymère ignifugés, contenant
1 à 50 % en poids d'agglomérats d'agents ignifuges phosphorés, thermostabilisés, selon au moins l'une des revendications 1 à 6,
1 à 99 % en poids de polymère ou de mélanges de tels polymères,
0 à 60 % en poids d'additifs,
0 à 60 % en poids de charge.

9. Corps moulés, films, fils et fibres en polymère ignifugés, contenant de 60 à 98 % en poids de matière à mouler polymère ignifugée selon la revendication 7, de 2 à 40 % en poids de polymère ou de mélanges de tels polymères.
